# FASCICULE DE BREVET EUROPEEN

(11) **EP 3 837 432 B1**
(45) Date de publication et mention de la délivrance du brevet: **21.12.2022**
(21) Numéro de dépôt: 19742329.6
(22) Date de dépôt: 15.07.2019
(51) Int. Cl.: F01N 3/20, F01N 3/28

(54) **ENSEMBLE POUR RÉDUIRE LES OXYDES D'AZOTE CIRCULANT DANS UNE LIGNE D'ÉCHAPPEMENT DE MOTEUR À COMBUSTION INTERNE**
ANORDNUNG ZUR REDUZIERUNG DER IN EINER ABGASLEITUNG EINES VERBRENNUNGSMOTORS ZIRKULIERENDEN STICKOXIDE
ASSEMBLY FOR REDUCING THE NITROGEN OXIDES CIRCULATING IN AN EXHAUST LINE OF AN INTERNAL COMBUSTION ENGINE

(30) Priorité: 16.07.2018 FR 1856558
(43) Date de publication de la demande: 23.06.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: MARTEAU, Francis, 78930 Vert (FR); BOULLY, Thomas, 75014 Paris (FR); SANTOS, Thomas, 75015 Paris (FR)
(74) Mandataire: Renault Group
(86) Numéro de dépôt international: PCT/EP2019/068965
(87) Numéro de publication internationale: WO 2020/016157

(56) Documents cités:
- WO-A1-2014/170711
- FR-A1- 3 010 135
- JP-A- 2004 257 325
- US-A1- 2010 115 928
- US-A1- 2017 292 426

## Description

L'objet de la présente invention se rapporte à la réduction catalytique sélective (communément désignée par *« SCR » pour : Selective Catalytic Reduction*) des oxydes d'azote compris dans des gaz d'échappement d'un moteur à combustion interne.

De nombreux moteurs, diesel notamment, émettent des gaz d'échappement comprenant une quantité importante d'oxydes d'azote (NOx), ces gaz d'échappement circulant dans des lignes d'échappement. Toutefois, la concentration de ces oxydes d'azote doit, en sortie des lignes d'échappement, être la plus faible possible pour éviter leur rejet dans l'atmosphère.

Ainsi, les lignes d'échappement, situées en aval des moteurs, comprennent généralement un catalyseur de réduction sélective des oxydes d'azote (ou : catalyseur SCR) qui permet de réduire les oxydes d'azote présents dans les gaz d'échappement. Pour permettre cette réduction, on injecte actuellement en amont du catalyseur, en utilisant une conduite reliant un réservoir à la ligne d'échappement et un injecteur, un liquide à base d'urée (par exemple de l'Adblue^{®}). Par ailleurs, ce liquide, avant de circuler dans le catalyseur, circule d'abord dans un mélangeur situé dans la ligne d'échappement en amont du catalyseur, le mélangeur étant apte à mélanger l'urée injectée dans la ligne d'échappement avec les gaz d'échappement avant que ce mélange ne soit introduit dans le catalyseur dans lequel l'urée se décompose alors en ammoniac gazeux. C'est cet ammoniac gazeux qui permet de réduire les oxydes d'azote en molécules inoffensives de dioxyde d'azote (NO₂) et d'eau (H₂O) lorsque les gaz d'échappement circulent à travers le catalyseur. En effet, il est connu que les molécules d'ammoniac (NH₃) sous forme gazeuse stockées dans le catalyseur agissent avec les oxydes d'azote (NOx, notamment sous forme NO et NO₂) selon la réaction suivante :

8NH₃ + 6NO₂ → 7N₂ + 12H₂O

4NH₃ + 4NO + O₂ → 4N₂ + 6H₂O

2NH₃ + NO + NO₂ → 2N₂ + 3H₂O.

Toutefois, il est connu que dans des conditions de froid critique, typiquement en-dessous de -11°C, l'activation de l'injecteur n'est pas possible car l'urée qui est sous forme liquide au-dessus de cette température, est ici gelée. En effet, lorsque l'urée est gelée, les technologies actuelles de réservoir qui, habituellement, mettent en œuvre un réchauffeur, ne permettent pas d'alimenter l'injecteur en urée en un temps suffisamment court pour permettre l'injection lors du démarrage du moteur. Ainsi, dans ces conditions de froid, l'urée liquide ne peut pas être introduite dans la ligne d'échappement pour permettre la réduction des oxydes d'azote. Ainsi, les systèmes à base d'urée liquide utilisés aujourd'hui dans ce cadre sont peu performants à basse température.

Pour pallier ces problèmes et inconvénients, le document EP1778586 présente un dispositif qui met en œuvre un matériau solide de stockage et de délivrance d'ammoniac, par exemple un sel solide de MgCl₂ qui se combine avec de l'ammoniac gazeux en Mg(NH₃)₆Cl₂.

Dans ce document EP1778586, on fournit le sel solide, on le sature en l'exposant à de l'ammoniac gazeux en mettant en œuvre une méthode connue en soi. Le sel solide est fourni sous forme de poudre peu dense. Cette poudre est ensuite comprimée pour obtenir une pastille que l'on place dans un dispositif de délivrance, tel qu'une enceinte, comprenant un moyen de chauffage, telle qu'une résistance et présentant des ouvertures de sortie qui peuvent être obturées pour libérer l'ammoniac gazeux qui sera utilisé dans le catalyseur SCR.

Dans ce document EP1778586, le dispositif de délivrance contient tout le stock de sels chargés en ammoniac qui est nécessaire au fonctionnement permanent du catalyseur SCR dans toutes les conditions de fonctionnement. Mais ce stock est fractionné en plusieurs petits blocs, chaque bloc étant à son tour chauffé par le moyen de chauffage. En effet, dans ces conditions, il n'est pas possible de chauffer la pastille dans son intégralité à cause du compactage préalable : la désorption serait trop lente. Quand le bloc a relâché tout son ammoniac, il est ensuite écarté dans un bac. Il est à noter que dans ce document, il n'y a pas de système d'alimentation du catalyseur par de l'urée liquide.

Dans ce document EP1778586, la mise en œuvre est complexe car elle force à embarquer tout le stock de sels nécessaire au fonctionnement du catalyseur SCR dans toutes les conditions de fonctionnement (y compris à chaud). En effet, le fait de prévoir un système de chauffage des blocs individuellement et de mise à l'écart du bloc usagé complexifie le dispositif. Il est alors nécessaire de prévoir une maintenance en remplaçant la cargaison usagée. Les blocs de sels, pour être utilisés de manière optimale, doivent aussi être préparés à l'avance, en particulier saturés préalablement en ammoniac.

Un autre document EP2428490 propose, quant à lui, une amélioration de la technologie divulguée dans EP178586. En particulier, la technologie décrite dans EP2428490 permet de s'affranchir de l'utilisation du compactage des sels, et des défauts et inconvénients que cela implique, et notamment du fait que le compactage de sels de type chlorure de métaux alcalino-terreux empêche de chauffer tout le stock de sels.

En effet, ce document EP2428490 propose un matériau qui permet un stockage dense et réversible de l'ammoniac, avec un temps de réponse court pour la désorption de l'ammoniac. Ce document EP2428490 enseigne, en particulier, l'utilisation de sels alcalino-terreux tels que SrCl₂, BaCL₂ ou MgCl₂, mais ces sels de poudre sont ensuite incorporés à du graphite expansé puis compactés formant une matrice composite poreuse qui permet un stockage réversible du gaz ammoniac. Ainsi, le catalyseur est alimenté à partir d'un réservoir de sels renfermant tout le stock, celui-ci étant intégralement chauffé par un moyen de chauffage, notamment une résistance. De ce fait, le dispositif et le procédé de EP2428490 sont plus simples que ceux du document EP178586, car il n'est pas nécessaire de mettre à disposition des petits blocs de matériau, ni des moyens pour les manipuler individuellement lorsqu'ils sont usagés.

Néanmoins, il est également à noter que EP2428490 ne décrit non plus de moyen d'alimentation par de l'urée liquide. En effet, le dispositif qu'il décrit force à embarquer toute la cargaison de sels nécessaires au fonctionnement du catalyseur, et il faut préparer les sels à l'avance en les saturant.

Par ailleurs, les références brevets JP2004/257325, WO2014/170711, FR3010135, US2010/115928 et US2017/292426 décrivent également des dispositifs pour réduire les oxydes d'azote circulant dans une ligne d'échappement de moteur à combustion, la ligne d'échappement comprenant un catalyseur alimenté en urée. Cependant, aucune de ces références brevets permet de remédier au moins en partie aux inconvénients, obstacles et problèmes précités.

L'objet de la présente, quant à lui, remédie aux inconvénients, obstacles et problèmes précités, en proposant un ensemble pour réduire au moins un oxyde d'azote circulant dans une ligne d'échappement, même dans des conditions de grands froids, l'ensemble comprenant un catalyseur situé dans la ligne d'échappement, le catalyseur pouvant être alimenté par un mélange gaz d'échappement/urée liquide et/ou par un mélange gaz d'échappement/ammoniac gazeux.

Ainsi, l'objet de la présente permet d'injecter de l'ammoniac gazeux dans la ligne d'échappement lors du démarrage du véhicule en attendant que l'urée liquide initialement gelée dans des conditions de froid critique se liquéfie et soit opérationnel pour réduire les oxydes d'azote compris dans les gaz d'échappement circulant dans la ligne d'échappement.

À cet effet, un aspect de la présente concerne un ensemble pour réduire les oxydes d'azote circulant dans une ligne d'échappement de moteur à combustion interne, l'ensemble comprenant :
- un réservoir d'urée liquide présentant une ou plusieurs sorties et une entrée alimentée par au moins une pipe de remplissage et, le réservoir étant associé à une pompe de distribution,
- une première conduite d'alimentation reliant le réservoir à la ligne d'échappement, la première conduite étant associée à un injecteur pour injecter au moins une partie de l'urée liquide dans la ligne d'échappement,
- la ligne d'échappement comprenant :
   o un mélangeur présentant au moins une entrée à laquelle est reliée la première conduite, et une sortie reliée à
   o un catalyseur de réduction sélective des oxydes d'azote,
l'ensemble étant caractérisé en ce qu'il comprend en outre :
- un moyen électrolyseur pour transformer au moins une partie de l'urée liquide en ammoniac gazeux, et
- une deuxième conduite d'alimentation pour l'introduction de l'ammoniac gazeux en sortie du mélangeur, la deuxième conduite reliant le réservoir à la ligne d'échappement et comprenant :
   ∘ un moyen absorbeur apte à absorber et désorber l'ammoniac gazeux, ledit moyen absorbeur présentant au moins une entrée et une sortie,
   ∘ une première vanne située à l'entrée du moyen absorbeur,
   ∘ une deuxième vanne située à la sortie du moyen absorbeur,
   ∘ un dispositif de modification de la pression intérieure du moyen absorbeur, et
   ∘ une troisième vanne pour la mise à l'air du moyen absorbeur.

Par moyen électrolyseur, on entend au sens de la présente invention, un moyen qui permet de vaporiser de l'urée liquide pour obtenir de l'ammoniac gazeux.

Par moyen absorbeur, on entend au sens de la présente invention, un moyen qui permet à la fois d'absorber de l'ammoniac gazeux, et également d'en désorber sous l'action d'un différentiel de pression et d'une augmentation de température.

Il est à noter que lorsqu'une vanne est ouverte, la circulation du fluide à l'intérieur de celle-ci est autorisée. En revanche, lorsqu'une vanne est fermée, la circulation du fluide à l'intérieur de celle-ci n'est pas autorisée.

L'objet de la présente se démarque principalement des solutions actuellement utilisées dans la mesure où ces dernières permettent la mise en œuvre uniquement d'urée sous forme liquide, alors que l'objet de la présente permet de mettre en œuvre de l'urée sous forme liquide et/ou sous forme gazeuse.

Par ailleurs, il est à noter que lorsque la troisième vanne est ouverte, la circulation de l'ammoniac gazeux entre le moyen absorbeur et la ligne d'échappement est permise par des phénomènes de différences de pression connus de l'homme du métier, notamment par des effets de Venturi.

Selon une caractéristique de l'invention, le moyen absorbeur peut comprendre des sels alcalino-terreux aptes à absorber et désorber l'ammoniac gazeux.

Ainsi, à l'aide du moyen absorbeur comprenant des sels alcalino-terreux dans le cadre la présente, comparé à ceux utilisés dans l'art antérieur, il n'est pas nécessaire d'embarquer un gros volume de sels puisque leur usage est réservé aux conditions de fonctionnement à froid. En outre, elle présente l'avantage de préparer les sels saturés en ammoniac directement dans l'ensemble, à partir de l'urée liquide introduit dans le moyen absorbeur, ce qui évite tout remplacement du ou des blocs de sel, et toute préparation préalable dont l'objet est de saturer les sels en ammoniac.

Selon une caractéristique de l'invention, le dispositif de modification de la pression intérieure du moyen absorbeur peut être un conduit associé à une troisième vanne, ledit conduit reliant le moyen absorbeur à une atmosphère extérieure à l'ensemble.

Selon une première variante de l'invention, le réservoir peut comprendre une seule sortie à laquelle sont directement reliées lesdites première et deuxième conduites.

Selon une caractéristique de cette première variante de l'invention, le moyen absorbeur peut comprendre le moyen électrolyseur.

Ainsi, la formation d'ammoniac gazeux est directement réalisée dans le moyen absorbeur après qu'y soit introduit de l'urée liquide.

Selon une deuxième variante de l'invention, le réservoir peut comprendre deux sorties, dont une première sortie à laquelle est reliée la première conduite et une deuxième sortie à laquelle est reliée la deuxième conduite.

Selon une caractéristique de cette deuxième variante de l'invention, le moyen électrolyseur peut être situé dans le réservoir.

Ainsi, la formation d'ammoniac gazeux est directement réalisée dans le réservoir de façon à introduire directement de l'ammoniac gazeux dans le moyen absorbeur.

Dans cette deuxième variante, par rapport à la première variante, l'encombrement du moyen absorbeur est réduit dans la mesure où il ne contient pas le moyen électrolyseur.

Selon une autre caractéristique de cette deuxième variante de l'invention, le réservoir peut être compartimenté en deux par une paroi de façon à isoler le moyen électrolyseur de la pipe de remplissage.

Ainsi, on évite qu'une partie de l'ammoniac gazeux circule dans la pipe de remplissage.

Selon une caractéristique de l'invention, le moyen électrolyseur peut comprendre un moyen de chauffage.

Par ailleurs, un véhicule automobile peut comprendre l'ensemble ci-avant décrit.

Un autre aspect de l'invention concerne un procédé pour alimenter en urée liquide ou ammoniac gazeux le moyen absorbeur de l'ensemble tel que défini ci-avant, le procédé comprenant les étapes suivantes :
- s'assurer que le réservoir contient de l'urée liquide ;
- vérifier l'aptitude à délivrer de l'urée liquide de l'association réservoir et pompe de distribution ;
- s'assurer que les première, deuxième et troisième vannes se trouvent en position fermée ;
- si l'association réservoir et pompe de distribution est apte à délivrer de l'urée liquide, délivrer de l'urée liquide dans la ligne d'échappement ;
- ouvrir la première vanne pour permettre l'introduction d'urée liquide ou d'ammoniac gazeux dans le moyen absorbeur;
- activer le moyen électrolyseur pour vaporiser l'urée liquide de façon à obtenir de l'ammoniac gazeux ;
- vérifier si le moyen absorbeur n'est pas saturé en ammoniac :
   o si saturation en ammoniac du moyen absorbeur, fermer la première vanne en poursuivant la distribution d'urée liquide dans la ligne d'échappement;
   o si non saturation en ammoniac du moyen absorbeur, répéter les étapes qui consistent à activer le moyen électrolyseur et à vérifier si le moyen absorbeur n'est pas saturé en ammoniac jusqu'à ce que le moyen absorbeur soit saturé en ammoniac.

Par « vanne en position ouverte », on entend, au sens de la présente invention, une vanne qui se trouve dans une position permettant la circulation de fluide à travers elle. *A contrario,* par « vanne en position fermée », on entend au sens de la présente invention, une vanne qui se trouve dans une position permettant d'interdire la circulation de fluide à travers elle.

Par *« s'assurer que le réservoir contient de l'urée liquide »*, on entend au sens de la présente invention, s'assurer que le volume d'urée liquide contenue dans le réservoir est supérieur au volume d'urée liquide minimal et nécessaire pour la mise en fonctionnement de l'ensemble selon l'invention.

Selon une première variante de réalisation l'invention, lorsque le moyen électrolyseur se trouve dans le moyen absorbeur, l'étape consistant à ouvrir la première vanne peut permettre l'introduction d'urée liquide dans le moyen absorbeur.

Ainsi, on permet l'introduction d'urée liquide dans le moyen absorbeur pour, lorsque le moyen électrolyseur qui se trouve dans le moyen absorbeur est activé, d'une part, permettre l'obtention d'ammoniac gazeux à partir d'urée liquide, et d'autre part, permettre l'absorption d'ammoniac gazeux du moyen absorbeur.

Selon une deuxième variante de réalisation de l'invention, lorsque le moyen électrolyseur se trouve dans le réservoir, l'étape consistant à ouvrir la première vanne peut permettre l'introduction d'ammoniac gazeux dans le moyen absorbeur. En effet, dans cette deuxième variante de réalisation, le moyen absorbeur est alors alimenté en ammoniac gazeux car l'électrolyse est réalisée directement dans le réservoir.

Selon une caractéristique de l'invention, le procédé peut comprendre en outre, si l'association réservoir et pompe de distribution n'est pas apte à délivrer de l'urée liquide, une étape consistant à maintenir la première vanne en position fermée et ouvrir les deuxième et troisième vannes. Ainsi, la désorption d'ammoniac gazeux du moyen absorbeur est permise. L'ammoniac gazeux issu de la désorption du moyen absorbeur peut alors être introduit dans la ligne de gaz d'échappement lorsque l'introduction d'urée liquide dans la ligne de gaz d'échappement n'est pas possible.

D'autres caractéristiques et avantages innovants ressortiront de la description ci-après, fournie à titre indicatif et nullement limitatif, en référence aux dessins annexés, dans lesquels :
- la figure 1 représente, de manière schématique, un ensemble moteur selon un premier exemple de réalisation selon l'invention comprenant un réservoir présentant une unique sortie, et
- la figure 2 représente, de manière schématique, un ensemble moteur selon un deuxième exemple de réalisation selon l'invention comprenant un réservoir présentant deux sorties.

Les éléments structurellement et fonctionnellement identiques, présents dans plusieurs figures distinctes, sont affectés d'une seule et même référence numérique ou alphanumérique.

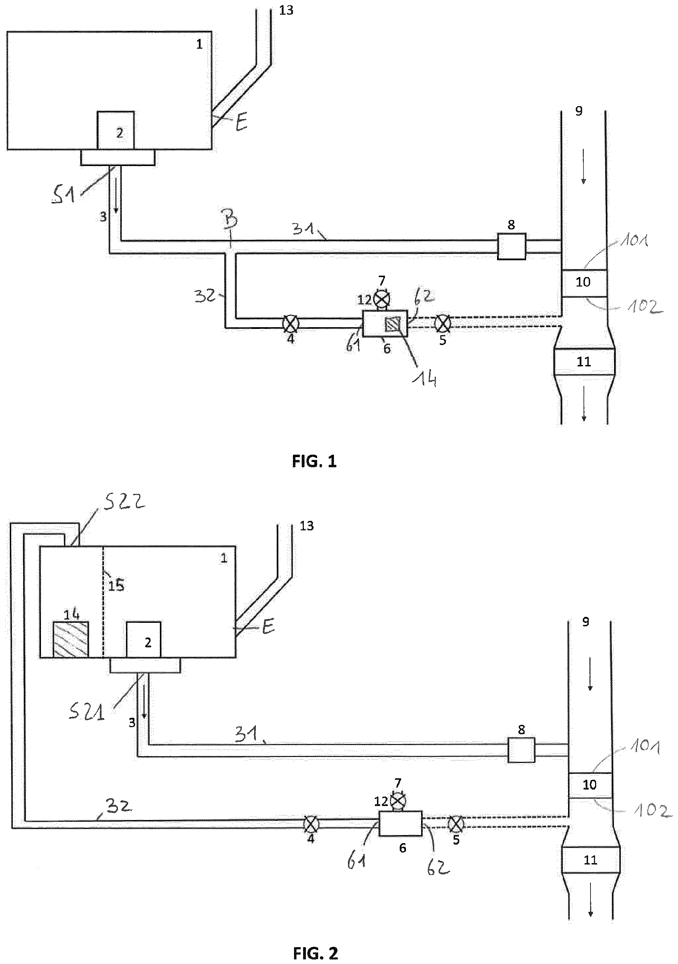

En référence à la figure 1, un premier exemple de réalisation d'un ensemble selon l'invention est illustré. L'ensemble permet de réduire les oxydes d'azote compris dans des gaz d'échappement et circulant dans une ligne d'échappement 9 située en aval d'un moteur qui peut être un moteur diesel. Pour réaliser cette réduction, selon ce premier exemple, il est possible d'introduire une quantité d'urée sous forme liquide et/ou une quantité sous forme gazeuse, en particulier sous forme d'ammoniac gazeux.

L'urée introduit sous forme liquide est par exemple de l'Adblue^{®} qui est une solution aqueuse connue et qui est conforme avec la norme ISO 22241. L'AdBlue^{®} est une solution aqueuse composée généralement à 32,5% d'urée et à 67,5% d'eau déminéralisée. Son utilisation permet de transformer plus de 85% des oxydes d'azote en vapeur d'eau et azote inoffensif.

L'ensemble comprend un réservoir 1 d'urée liquide présentant une sortie S1 et une entrée E. Le réservoir 1 comprend également une jauge (non représentée sur les figures) pour mesurer le volume d'urée liquide qu'il contient. L'entrée E est connectée à une pipe de remplissage 13 qui permet d'alimenter le réservoir 1 en urée liquide. Le réservoir 1 est associé à une pompe de distribution 2 qui permet, lorsqu'elle est en fonctionnement, l'extraction d'urée liquide du réservoir 1 par la sortie S1.

La sortie S1 est connectée à une conduite principale 3 d'alimentation reliant le réservoir 1 à un point de bifurcation B transformant la conduite principale 3 en une première conduite 31 et une deuxième conduite 32.

La première conduite 31 relie le point de bifurcation B à la ligne d'échappement 9 de manière à introduire dans cette dernière une quantité d'urée liquide contenue initialement dans le réservoir 1. Un injecteur 8 est associé à cette première conduite 31. L'injecteur 8 permet d'injecter dans la ligne d'échappement 9 au moins une partie de l'urée liquide contenue initialement dans le réservoir 1 et circulant dans la première conduite 31.

À l'intérieur de la ligne d'échappement 9 sont disposés un mélangeur 10 présentant au moins une entrée 101 et une sortie 102, et un catalyseur 11 de réduction sélective des oxydes d'azote situé du côté de la sortie 102 du mélangeur 10, c'est-à-dire en aval du mélangeur 10.

En particulier, l'urée liquide qui circule dans la première conduite 31 est injectée dans la ligne d'échappement 9 du côté de l'entrée 101 du mélangeur 10, c'est-à-dire en amont du mélangeur 10 au regard du sens de circulation des gaz d'échappement.

Une première partie de la deuxième conduite 32 relie, quant à elle, le point de bifurcation B et une entrée 61 d'un moyen absorbeur 6 présentant, en sus de l'entrée 61, une sortie 62 et un orifice connecté à un dispositif de modification de la pression intérieure du moyen absorbeur 6, ce dispositif comprenant un conduit 12 reliant le moyen absorbeur 6 à une atmosphère extérieure à l'ensemble, comme l'air ambiant.

Le moyen absorbeur 6 comprend des sels alcalino-terreux tels que le MgCl₂ ou ceux enseignés pas les documents de l'art antérieur EP1778586 ou EP2428490. Ces sels sont aptes à absorber et désorber l'ammoniac compris dans l'urée.

Le moyen absorbeur 6 comprend un moyen électrolyseur 14 pour transformer au moins une partie de l'urée liquide qui circule dans la première partie de la deuxième conduite 32 et est introduite dans le moyen absorbeur 16 par l'entrée 61 en ammoniac gazeux, l'ammoniac gazeux ressortant du moyen absorbeur 6 par la sortie 62. Par exemple, ce moyen électrolyseur 14 peut être sous forme d'une enveloppe renfermant des moyens de chauffage telle qu'une résistance.

La sortie 62 du moyen absorbeur 6 est reliée, à l'aide de la deuxième partie de la deuxième conduite 32, à la ligne d'échappement 9, en particulier à la sortie 102 du mélangeur 10 qui se trouve en amont du catalyseur 11, c'est-à-dire en aval du mélangeur 10.

Ainsi le moyen absorbeur 6 est apte à introduire en amont du catalyseur 11, de l'ammoniac gazeux de manière à réaliser, en sortie 102 du mélangeur 10, un mélange de gaz d'échappement et d'ammoniac gazeux lorsqu'on ne peut pas introduire de l'urée sous forme liquide en amont du mélangeur 10.

Il est à noter qu'en entrée 61 du moyen absorbeur 6, on a une première vanne 4 pour permettre ou non la circulation d'urée entre le réservoir 1 et le moyen absorbeur 6. En outre, on a une deuxième vanne 5 en sortie 62 du moyen absorbeur 6 pour permettre ou non la circulation d'ammoniac gazeux entre le moyen absorbeur 6 et la sortie 102 du mélangeur 10. Et, on a également une troisième vanne 7 en sortie de l'orifice pour permettre ou non la mise en fonctionnement du dispositif de modification de la pression intérieure du moyen absorbeur 6. Ainsi, l'introduction d'urée liquide dans le moyen absorbeur 6 et l'introduction d'ammoniac gazeux dans la ligne d'échappement sont contrôlées et réalisées à souhait.

En effet, lorsque les deuxième et troisième vannes 6 et 7 sont ouvertes, il y a création de perturbations de pression notamment à l'intérieur du moyen absorbeur 6 et à l'intérieur de la partie de la deuxième partie de la deuxième conduite 32. Ces perturbations permettent la circulation d'ammoniac gazeux entre la sortie 62 du moyen absorbeur 6 et la ligne d'échappement 9.

Il est à noter que les trois vannes 4, 5 et 7 sont de préférence des électrovannes actionnables à distance.

En référence à la figure 2, un deuxième exemple de réalisation d'un ensemble selon l'invention est illustré. Dans ce deuxième exemple, le réservoir 1 comprend deux sorties, une première sortie S21 à laquelle est reliée la première conduite 31 précédemment décrit dans le premier exemple, et une deuxième sortie S22 à laquelle est reliée la deuxième conduite 32 précédemment décrite, la deuxième conduite 32 étant constituée des première et deuxième parties de la deuxième conduite 32. Les première et deuxième parties de la deuxième conduite 32 sont connectées à un moyen absorbeur 6 et à la ligne d'échappement 9 comme indiqué dans le premier exemple. Toutefois, le moyen électrolyseur 14 compris dans le moyen absorbeur 6 dans le premier exemple, est, dans le deuxième exemple, compris dans le réservoir 1.

Le moyen électrolyseur 14 permet, dans ce deuxième exemple, de former directement de l'ammoniac gazeux à partir de l'urée liquide contenue dans le réservoir 1.

Il est à noter que dans ce deuxième exemple, la deuxième sortie S22 est située en partie haute du réservoir 1, par exemple au-dessus du moyen électrolyseur 14, pour que l'ammoniac gazeux qui se forme et qui se déplace vers la partie haute du réservoir 1 puisse être évacué dans la deuxième conduite 32. Cette deuxième sortie S22 n'est toutefois pas positionnée du même côté que celui de la pipe de remplissage 13.

Par ailleurs, le réservoir 1 est compartimenté en deux par une paroi 15 de façon à isoler le moyen électrolyseur 14 situé alors à gauche de la paroi sur la figure 2, de la pipe de remplissage 13 située à droite de la paroi sur la figure 2. Par exemple, on peut utiliser une paroi 15 haute, c'est-à-dire une paroi verticale pleine qui sépare les parties hautes des deux compartiments du réservoir 1, mais qui permet une circulation d'urée liquide entre les parties basses des compartiments. Ceci est par exemple permis grâce au fait que la partie inférieure de la paroi 15 s'arrête à mi-hauteur du réservoir 1. Une telle paroi 15 présente l'avantage de permettre la circulation d'urée liquide en partie basse de la paroi 15 pour que le moyen électrolyseur 14 soit alimenté, dès lors que le réservoir 1 contient de l'urée liquide.

Selon ce deuxième exemple, uniquement de l'ammoniac gazeux circule alors dans la deuxième conduite 32.

Ainsi, lorsque la première vanne 4 est ouverte, de l'ammoniac gazeux est introduit dans le moyen absorbeur 6. Cet ammoniac gazeux est absorbé par les sels. Et, lorsque l'on ferme la première vanne 4, et que l'on ouvre les deuxième et troisième vannes 5 et 6, l'ammoniac gazeux est désorbé des sels et circule alors, à l'aide des perturbations de pressions, à travers la deuxième partie de la deuxième conduite 32 pour être introduit dans la ligne d'échappement entre le mélangeur 10 et le catalyseur 11.

Ce deuxième exemple a pour principal avantage de réduire le volume d'encombrement de l'ensemble absorbeur 6/ moyen électrolyseur 14, mais nécessite toutefois la mise en place d'un réservoir 1 d'urée plus complexe.

Il est à noter notamment que dans les deux exemples de réalisation ci-avant décrits, le moyen absorbeur 6 présente l'avantage de ne pas avoir besoin d'une opération de maintenance, tel que le rechargement en sels saturés d'ammoniac, dans la mesure où les sels sont aptes à absorber et désorber de l'ammoniac gazeux.

Les deux exemples de réalisation selon l'invention peuvent être utilisés dans un véhicule automobile comprenant notamment un moteur diesel.

On peut alors utiliser l'ensemble du premier exemple de réalisation comme indiqué ci-après.

Dans une première étape 100, on met le contact pour tenter de démarrer le véhicule, en particulier pour mettre en fonctionnement le moteur, en s'assurant que les première, deuxième et troisième vannes 4, 5 et 7 se trouvent en position fermée.

Ensuite, dans une étape suivante 200, on vérifie, par exemple en mesurant avec la jauge, le volume d'urée liquide que contient le réservoir 1. Ainsi, on s'assure que le réservoir 1 d'urée liquide n'est pas vide, ou tout du moins que le volume qu'il contient est suffisant pour la mise en fonctionnement du premier ensemble.

Si le réservoir 1 est vide ou ne contient pas suffisamment d'urée liquide, le démarrage du véhicule n'est pas autorisé.

En revanche, si le réservoir 1 contient une quantité suffisante d'urée liquide, le démarrage est autorisé. Toutefois, avant le démarrage du véhicule, une étape 300 de vérification de l'aptitude du réservoir 1 à délivrer de l'urée liquide est réalisée. Cette étape 300 de vérification est effectuée, par exemple, en utilisant un capteur de pression (non représenté sur les figures) situé dans le réservoir 1 et qui permet de contrôler la pression de l'urée contenue dans le réservoir 1 afin de remarquer si celle-ci est suffisante pour l'extraction de l'urée du réservoir 1, le capteur pouvant être connecté à la pompe de distribution 2 pour garantir également que la pression est suffisante pour la mise en fonctionnement de cette pompe de distribution 2. Par exemple, lorsque l'urée est gelée, la pression de l'urée n'est pas suffisante, donc la délivrance d'urée n'est pas possible.

Dans le cas où le réservoir 1, associé à la pompe de distribution 2, est apte à délivrer de l'urée liquide, le véhicule démarre et les étapes suivantes 400 à 900 sont mises en œuvre.

D'abord, l'étape 400 est mise en œuvre et consiste à délivrer de l'urée liquide à la ligne d'échappement 9 en amont du mélangeur 10 via la première conduite 31. La délivrance est effective jusqu'à la coupure du contact du véhicule.

Alors que le véhicule est en fonctionnement, une étape 500 suivante permet de s'assurer que les première, deuxième et troisième vannes 4, 5 et 7 se trouvent en position fermée.

Il est à noter que les vannes 4, 5 et 7 sont des électrovannes contrôlables à distance.

Puis, une étape 600 est réalisée et permet à la première vanne 4 de passer de la position fermée à une position ouverte, permettant ainsi la circulation d'urée liquide dans le moyen absorbeur 6 alors, d'une part, que le véhicule est toujours en fonctionnement, et d'autre part, que de l'urée liquide est injectée dans la ligne d'échappement 9 en amont du mélangeur 10.

Ensuite, dans une étape 700, le moyen électrolyseur 14 s'active pour vaporiser l'urée liquide introduit dans le moyen absorbeur 6 de façon à obtenir de l'ammoniac gazeux. L'ammoniac gazeux est alors absorbé, dans le premier exemple de réalisation, par les sels.

Puis, dans une étape 800 suivante, on vérifie si le moyen absorbeur 6 n'est pas saturé en ammoniac, en mesurant, par exemple à l'aide d'un capteur de pression (non représenté dans les figures), la pression à l'intérieur du moyen absorbeur 6.

Si le moyen absorbeur 6 est saturé en ammoniac, par exemple si la pression à l'intérieur du moyen absorbeur 6 est supérieure ou égale à une pression seuil, on peut passer à l'étape suivante 900 qui consiste à fermer la première vanne 4 tout en poursuivant la distribution d'urée liquide dans la ligne d'échappement 9 jusqu'à la coupure de contact du véhicule.

En revanche, si le moyen absorbeur 6 n'est pas saturé en ammoniac, par exemple si la pression à l'intérieur du moyen absorbeur 6 est inférieure à une pression seuil de l'ordre de 1,03 bar, l'étape 700 est réalisée à nouveau, puis celles qui suivent également jusqu'à ce que le moyen absorbeur 6 soit saturé en ammoniac gazeux. Puis, comme précédemment, la distribution d'urée liquide dans la ligne d'échappement 9 est poursuivie jusqu'à la coupure de contact du véhicule.

Toutefois, dans le cas où le réservoir 1, associé à la pompe de distribution 2, n'est pas apte à délivrer de l'urée liquide, les étapes suivantes 1000 à 1100, plutôt que les étapes 400 à 900, sont mises en œuvre.

D'abord l'étape 1000 qui consiste, d'une part, à s'assurer que la première vanne 4 est en position fermée, et d'autre part, à ouvrir les deuxième et troisième vannes 5 et 7 afin de modifier la pression à l'intérieur du moyen absorbeur 6 pour permettre une circulation d'air entre l'orifice du moyen absorbeur 6 et la sortie 62 du moyen absorbeur 6.

Puis, une étape 1100 est réalisée et consiste à activer le moyen électrolyseur 14 pour désorber l'ammoniac des sels. Ainsi, sous l'action de la circulation ci-avant mentionnée, l'ammoniac gazeux est transporté depuis le moyen absorbeur 6 vers la ligne d'échappement 9, cette circulation étant accentuée par des effets de Venturi.

L'étape 1100 est maintenue jusqu'à ce que la distribution en urée liquide en amont du mélangeur 10, par la première conduite 31, soit possible. Par exemple, cette distribution d'urée liquide en amont du mélangeur 10 peut être déclenchée dès lors que la température à l'intérieur du réservoir 1 (cette température pouvant être contrôlée par un capteur de température situé à l'intérieur du réservoir, capteur qui n'est pas présenté dans les figures) atteint une température seuil, ou après avoir attendu une période prédéterminée débutant dès la mise en contact du véhicule.

Dès lors que la distribution d'urée liquide est permise dans la ligne d'échappement 9, l'étape 500 peut être mise en œuvre afin de réduire les oxydes d'azote présents dans les gaz d'échappement lorsque le véhicule est en fonctionnement.

On peut également utiliser l'ensemble du deuxième exemple de réalisation comme indiqué ci-après. Les étapes 100' à 600' sont les mêmes que celles 100 à 600 mentionnées ci-avant. Toutefois, pour la mise en œuvre du deuxième exemple de réalisation, à l'étape 600', la première vanne 4 s'ouvre mais il n'y a pas d'urée liquide qui circule à travers celle-ci. À l'étape 700', semblable à celle 700, le moyen électrolyseur 14 située dans le réservoir 1 s'active pour vaporiser une partie de l'urée liquide contenue dans le réservoir 1 de façon à obtenir de l'ammoniac gazeux. L'ammoniac gazeux est alors ensuite extrait du réservoir 1 par la sortie S22. Cet ammoniac gazeux est ensuite introduit dans le moyen absorbeur 6 et est absorbé par les sels.

Puis, les étapes 800' à 1000' mises en œuvre pour utiliser le deuxième exemple de réalisation sont les mêmes 800 à 100 que celles mises en œuvre pour l'utilisation du premier exemple de réalisation. Il est à noter que la désorption des sels est réalisée grâce au différentiel de pression entre la ligne d'échappement 9 et le moyen absorbeur 6, après ouverture de la troisième vanne 7.

Ainsi, dans ces deux exemples de réalisation, les sels ne sont utilisés que très peu, avant l'injection d'urée liquide dans la ligne d'échappement 9 et pendant leur saturation. Ainsi, il n'est pas nécessaire de les remplacer comme c'est le cas dans l'art antérieur, où le remplacement des sels est généralement effectué en concession lorsque l'on est en présence de cartouches d'urée solide, ces cartouches étant forcément plus volumineuses, car devant couvrir plusieurs situations de vie roulage par conditions de grand froid. Au contraire, le moyen absorbeur 6 de la présente demande est apte à fonctionner sans être échangé du fait de la recharge lors de l'introduction d'urée liquide dans la ligne d'échappement 9.

## Revendications

1. Ensemble pour réduire les oxydes d'azote circulant dans une ligne d'échappement (9) de moteur à combustion interne, ledit ensemble comprenant :
- un réservoir (1) d'urée liquide présentant une ou plusieurs sorties et une entrée alimentée par au moins une pipe de remplissage (13) et, ledit réservoir (1) étant associé à une pompe de distribution (12),
- une première conduite (31) d'alimentation reliant ledit réservoir (1) à ladite ligne d'échappement (9), ladite première conduite (31) étant associée à un injecteur (8) pour injecter au moins une partie de l'urée liquide dans ladite ligne d'échappement (9),
- ladite ligne d'échappement (9) comprenant :
∘ un mélangeur (10) présentant au moins une entrée (101) à laquelle est reliée ladite première conduite (31), et une sortie (102) reliée à
∘ un catalyseur (11) de réduction sélective des oxydes d'azote,
ledit ensemble étant **caractérisé en ce qu'**il comprend en outre :
- un moyen électrolyseur (14) pour transformer au moins une partie de l'urée liquide en ammoniac gazeux, et
- une deuxième conduite (32) d'alimentation pour l'introduction dudit ammoniac gazeux en sortie dudit mélangeur (10), ladite deuxième conduite (32) reliant ledit réservoir (1) à ladite ligne d'échappement (9) et comprenant :
∘ un moyen absorbeur (6) apte à absorber et/ou désorber l'ammoniac gazeux, ledit moyen absorbeur (6) présentant au moins une entrée (61) et une sortie (62),
∘ une première vanne (4) située à ladite entrée (61) dudit moyen absorbeur (6),
∘ une deuxième vanne (5) située à ladite sortie (62) dudit moyen absorbeur (6),
∘ un dispositif de modification de la pression intérieure du moyen absorbeur (6), et
∘ une troisième vanne (7) pour la mise à l'air dudit moyen absorbeur (6).

2. Ensemble selon la revendication 1, selon lequel ledit moyen absorbeur (6) comprend des sels alcalino-terreux aptes à absorber et désorber l'ammoniac gazeux.

3. Ensemble selon les revendications 1 ou 2, selon lequel ledit dispositif de modification de la pression intérieure du moyen absorbeur (6) peut être un conduit (12) associé à une troisième vanne (7), ledit conduit (12) reliant le moyen absorbeur (6) à une atmosphère extérieure à l'ensemble.

4. Ensemble selon l'une quelconque des revendications 1 à 3, selon lequel ledit réservoir (1) comprend une seule sortie (S1) à laquelle sont directement reliées lesdites première et deuxième conduites (31, 32).

5. Ensemble selon la revendication 4, selon lequel ledit moyen absorbeur (6) comprend ledit moyen électrolyseur (14).

6. Ensemble selon l'une quelconque des revendications 1 à 3, selon lequel ledit réservoir (1) comprend deux sorties (S21, S22), dont une première sortie (S21) à laquelle est reliée ladite première conduite (31) et une deuxième sortie (S22) à laquelle est reliée ladite deuxième conduite (32).

7. Ensemble selon la revendication 6, selon lequel ledit moyen électrolyseur (14) est situé dans ledit réservoir (1) .

8. Ensemble selon la revendication 7, selon lequel ledit réservoir (1) est compartimenté en deux par une paroi (15) de façon à isoler ledit moyen électrolyseur (14) de ladite pipe de remplissage (13).

9. Ensemble selon l'une quelconque des revendications 1 à 8, selon lequel ledit moyen électrolyseur (14) comprend un moyen de chauffage.

10. Véhicule automobile **caractérisé en ce qu'**il comprend un ensemble selon l'une quelconque des revendications 1 à 9.

11. Procédé pour alimenter en urée liquide ou ammoniac gazeux ledit moyen absorbeur (6) dudit ensemble tel que défini selon l'une quelconque des revendications 1 à 9, ledit procédé comprenant les étapes suivantes :
- s'assurer (100) que ledit réservoir (1) contient de l'urée liquide ;
- vérifier (300) l'aptitude à délivrer de l'urée liquide de l'association réservoir (1) et pompe de distribution (12) ;
- s'assurer (500) que lesdites première, deuxième et troisième vannes (4, 5, 7) se trouvent en position fermée ;
- si l'association réservoir (1) et pompe de distribution (12) est apte à délivrer de l'urée liquide, délivrer (400) de l'urée liquide dans ladite ligne d'échappement (9) ;
- ouvrir (600) ladite première vanne (4) pour permettre l'introduction d'urée liquide ou d'ammoniac gazeux dans ledit moyen absorbeur (6) ;
- activer (700) ledit moyen électrolyseur (14) pour vaporiser l'urée liquide de façon à obtenir de l'ammoniac gazeux ;
- vérifier (800) si le moyen absorbeur (6) n'est pas saturé en ammoniac :
∘ si saturation en ammoniac dudit moyen absorbeur (6), fermer ladite première vanne (4) en poursuivant la distribution d'urée liquide dans la ligne d'échappement (9) ;
∘ si non saturation en ammoniac dudit moyen absorbeur (6), répéter les étapes qui consistent à activer (700) ledit moyen électrolyseur (14) et à vérifier (800) si ledit moyen absorbeur (6) n'est pas saturé en ammoniac jusqu'à ce que ledit moyen absorbeur (6) soit saturé en ammoniac.

12. Procédé selon la revendication 11, lorsque ledit moyen électrolyseur (14) se trouve dans ledit moyen absorbeur (6), l'étape consistant à ouvrir (600) ladite première vanne (4) permet l'introduction d'urée liquide dans ledit moyen absorbeur (6).

13. Procédé selon la revendication 11, lorsque ledit moyen électrolyseur (14) se trouve dans ledit réservoir (1), l'étape consistant à ouvrir (600) ladite première vanne (4) permet l'introduction d'ammoniac gazeux dans ledit moyen absorbeur (6).

14. Procédé selon l'une quelconque des revendications 11 à 13, le procédé comprend en outre, si l'association réservoir (1) et pompe de distribution (12) n'est pas apte à délivrer de l'urée liquide, une étape consistant à maintenir ladite première vanne (4) en position fermée et ouvrir lesdites deuxième et troisième vannes (5,7).

## Patentansprüche

1. Anordnung zur Reduzierung der in einer Abgasanlage (9) eines Verbrennungsmotors zirkulierenden Stickoxide, wobei die Anordnung umfasst:
- einen Behälter (1) für flüssigen Harnstoff, der einen oder mehrere Auslässe aufweist und einen Einlass, der über mindestens einen Einfüllstutzen (13) versorgt wird, und, wobei der Tank (1) einer Abgabepumpe (12) zugeordnet ist,
- eine erste Versorgungsleitung (31), die den Behälter (1) mit der Abgasanlage (9) verbindet, wobei die erste Leitung (31) einem Injektor (8) zugeordnet ist, um mindestens einen Teil des flüssigen Harnstoffs in die Abgasanlage (9) einzuspritzen,
- wobei die Abgasanlage (9) umfasst:
∘ einen Mischer (10), der mindestens einen Einlass (101) aufweist, mit dem die erste Leitung (31) verbunden ist, und einen Auslass (102), der verbunden ist mit
∘ einem Katalysator (11) zur selektiven Reduzierung der Stickoxide,
wobei die Anordnung **dadurch gekennzeichnet ist, dass** sie ferner umfasst:
- eine Elektrolyseureinrichtung (14), um mindestens einen Teil des flüssigen Harnstoffs in gasförmigen Ammoniak umzuwandeln, und
- eine zweite Versorgungsleitung (32) zum Einleiten des gasförmigen Ammoniaks am Auslass des Mischers (10), wobei die zweite Leitung (32) den Behälter (1) mit der Abgasanlage (9) verbindet und umfasst:
∘ eine Absorbereinrichtung (6), die geeignet ist, das gasförmige Ammoniak zu absorbieren und/oder zu desorbieren, wobei die Absorbereinrichtung (6) mindestens einen Einlass (61) und einen Auslass (62) aufweist,
∘ ein erstes Ventil (4), das an dem Einlass (61) der Absorbereinrichtung (6) angeordnet ist,
∘ ein zweites Ventil (5), das an dem Auslass (62) der Absorbereinrichtung (6) angeordnet ist,
∘ eine Vorrichtung zur Änderung des Innendrucks der Absorbereinrichtung (6) und
∘ ein drittes Ventil (7) zur Entlüftung der Absorbereinrichtung (6).

2. Anordnung nach Anspruch 1, wobei die Absorbereinrichtung (6) Erdalkalisalze umfasst, die geeignet sind, das gasförmige Ammoniak zu absorbieren und zu desorbieren.

3. Anordnung nach den Ansprüchen 1 oder 2, wobei die Vorrichtung zur Änderung des Innendrucks der Absorbereinrichtung (6) eine Leitung (12) sein kann, die einem dritten Ventil (7) zugeordnet ist, wobei die Leitung (12) die Absorbereinrichtung (6) mit einer Atmosphäre außerhalb der Anordnung verbindet.

4. Anordnung nach einem der Ansprüche 1 bis 3, wobei der Behälter (1) einen einzigen Auslass (S1) umfasst, mit dem direkt die ersten und zweiten Leitungen (31, 32) verbunden sind.

5. Anordnung nach Anspruch 4, wobei die Absorbereinrichtung (6) die Elektrolyseureinrichtung (14) umfasst.

6. Anordnung nach einem der Ansprüche 1 bis 3, wobei der Behälter (1) zwei Auslässe (S21, S22) umfasst, darunter einen ersten Auslass (S21), mit dem die erste Leitung (31) verbunden ist, und einen zweiten Auslass (S22), mit dem die zweite Leitung (32) verbunden ist.

7. Anordnung nach Anspruch 6, wobei die Elektrolyseureinrichtung (14) in dem Behälter (1) angeordnet ist.

8. Anordnung nach Anspruch 7, wobei der Behälter (1) durch eine Wand (15) in zwei Teile unterteilt ist, so dass die Elektrolyseureinrichtung (14) von dem Einfüllstutzen (13) isoliert ist.

9. Anordnung nach einem der Ansprüche 1 bis 8, wobei die Elektrolyseureinrichtung (14) eine Heizeinrichtung umfasst.

10. Kraftfahrzeug, **dadurch gekennzeichnet, dass** es eine Anordnung nach einem der Ansprüche 1 bis 9 umfasst.

11. Verfahren zur Versorgung der Absorbereinrichtung (6) der Anordnung wie nach einem der Ansprüche 1 bis 9 definiert mit flüssigem Harnstoff oder gasförmigem Ammoniak, wobei das Verfahren die folgenden Schritte umfasst:
- Sicherstellen (100), dass der Behälter (1) flüssigen Harnstoff enthält;
- Überprüfen (300) der Eignung der Kombination aus Behälter (1) und Abgabepumpe (12), flüssigen Harnstoff auszugeben;
- Sicherstellen (500), dass sich die ersten, zweiten und dritten Ventile (4, 5, 7) in geschlossener Stellung befinden;
- wenn die Kombination aus Behälter (1) und Abgabepumpe (12) geeignet ist, flüssigen Harnstoff auszugeben, Ausgeben (400) von flüssigem Harnstoff in die Abgasanlage (9);
- Öffnen (600) des ersten Ventils (4), um das Einleiten von flüssigem Harnstoff oder gasförmigem Ammoniak in die Absorbereinrichtung (6) zu ermöglichen;
- Aktivieren (700) der Elektrolyseureinrichtung (14), um den flüssigen Harnstoff zu verdampfen, so dass gasförmiges Ammoniak erhalten wird;
- Überprüfen (800), ob die Absorbereinrichtung (6) mit Ammoniak gesättigt ist:
∘ wenn Sättigung der Absorbereinrichtung (6) mit Ammoniak, Schließen des ersten Ventils (4) unter Fortsetzung der Abgabe von flüssigem Harnstoff in die Abgasanlage (9);
∘ wenn keine Sättigung der Absorbereinrichtung (6) mit Ammoniak, Wiederholen der Schritte, die darin bestehen, die Elektrolyseureinrichtung (14) zu aktivieren (700) und zu überprüfen (800), ob die Absorbereinrichtung (6) mit Ammoniak gesättigt ist, bis diese Absorbereinrichtung (6) mit Ammoniak gesättigt ist.

12. Verfahren nach Anspruch 11, wenn sich die Elektrolyseureinrichtung (14) in der Absorbereinrichtung (6) befindet, wobei der Schritt, der darin besteht, das erste Ventil (4) zu öffnen (600), das Einleiten von flüssigem Harnstoff in die Absorbereinrichtung (6) ermöglicht.

13. Verfahren nach Anspruch 11, wenn sich die Elektrolyseureinrichtung (14) in dem Behälter (1) befindet, wobei der Schritt, der darin besteht, das erste Ventil (4) zu öffnen (600), das Einleiten von gasförmigem Ammoniak in die Absorbereinrichtung (6) ermöglicht.

14. Verfahren nach einem der Ansprüche 11 bis 13, wobei das Verfahren ferner, wenn die Kombination aus Behälter (1) und Abgabepumpe (12) nicht geeignet ist, flüssigen Harnstoff auszugeben, einen Schritt umfasst, der darin besteht, das erste Ventil (4) in geschlossener Stellung zu halten und die zweiten und dritten Ventile (5, 7) zu öffnen.

## Claims

1. Assembly for reducing the nitrogen oxides circulating through an exhaust line (9) of an internal combustion engine, said assembly comprising:
- a tank (1) of liquid urea having one or more outlets and an inlet fed by at least one filling pipe (13), and said tank (1) being associated with a distribution pump (12),
- a first feed pipe (31) connecting said tank (1) to said exhaust line (9), said first pipe (31) being associated with an injector (8) for injecting at least some of the liquid urea into said exhaust line (9),
- said exhaust line (9) comprising:
o a mixer (10) having at least one inlet (101) to which said first pipe (31) is connected, and an outlet (102) connected to
∘ a catalytic converter (11) for the selective catalytic reduction of the nitrogen oxides,
said assembly being **characterized in that** it further comprises:
- an electrolysis means (14) for converting at least some of the liquid urea into gaseous ammonia, and
- a second feed pipe (32) for introducing said gaseous ammonia at the outlet of said mixer (10), said second pipe (32) connecting said tank (1) to said exhaust line (9) and comprising:
∘ an absorber means (6) able to absorb and/or to desorb gaseous ammonia, said absorber means (6) having at least one inlet (61) and one outlet (62),
∘ a first valve (4) situated at said inlet (61) of said absorber means (6),
∘ a second valve (5) situated at said outlet (62) of said absorber means (6),
∘ a device for modifying the internal pressure of the absorber means (6), and
∘ a third valve (7) for venting said absorber means (6) .

2. Assembly according to Claim 1, wherein said absorber means (6) comprises alkaline earth salts able to absorb and desorb gaseous ammonia.

3. Assembly according to Claims 1 or 2, wherein said device for modifying the internal pressure of the absorber means (6) may be a duct (12) associated with a third valve (7), said duct (12) connecting the absorber means (6) to an atmosphere external to the assembly.

4. Assembly according to any one of Claims 1 to 3, wherein said tank (1) comprises a single outlet (S1) to which said first and second pipes (31, 32) are connected directly.

5. Assembly according to Claim 4, wherein said absorber means (6) comprises said electrolysis means (14).

6. Assembly according to any one of Claims 1 to 3, wherein said tank (1) comprises two outlets (S21, S22), these being a first outlet (S21) to which said first pipe (31) is connected and a second outlet (S22) to which said second pipe (32) is connected.

7. Assembly according to Claim 6, wherein said electrolysis means (14) is situated in said tank (1).

8. Assembly according to Claim 7, wherein said tank (1) is compartmentalized into two compartments by a wall (15) so as to isolate said electrolysis means (14) from said filling pipe (13).

9. Assembly according to any one of Claims 1 to 8, wherein said electrolysis means (14) comprises a heating means.

10. Motor vehicle **characterized in that** it comprises an assembly according to any one of Claims 1 to 9.

11. Method for feeding liquid urea or gaseous ammonia to said absorber means (6) of said assembly as defined in any one of Claims 1 to 9, said method comprising the following steps:
- ensuring (100) that said tank (1) contains liquid urea;
- checking (300) the ability of the combination of the tank (1) and the distribution pump (12) to deliver liquid urea;
- ensuring (500) that said first, second and third valves (4, 5, 7) are in the closed position;
- if the combination of the tank (1) and of the distribution pump (12) is able to deliver liquid urea, delivering (400) liquid urea to said exhaust line (9);
- opening (600) said first valve (4) to allow liquid urea or gaseous ammonia to be introduced into said absorber means (6);
- activating (700) said electrolysis means (14) to vaporize the liquid urea in order to obtain gaseous ammonia;
- checking (800) whether the absorber means (6) has become saturated with ammonia:
∘ if said absorber means (6) is saturated with ammonia, closing said first valve (4) while continuing to distribute liquid urea into the exhaust line (9);
∘ if said absorber means (6) is not saturated with ammonia, repeating the steps consisting in activating (700) said electrolysis means (14) and in checking (800) whether said absorber means (6) has become saturated with ammonia until such time as said absorber means (6) has become saturated with ammonia.

12. Method according to Claim 11, when said electrolysis means (14) is in said absorber means (6), the step consisting in opening (600) said first valve (4) allows liquid urea to be introduced into said absorber means (6) .

13. Method according to Claim 11, when said electrolysis means (14) is in said tank (1), the step consisting in opening (600) said first valve (4) allows gaseous ammonia to be introduced into said absorber means (6).

14. Method according to any one of Claims 11 to 13, wherein the method further comprises, if the combination of tank (1) and distribution pump (12) is not able to deliver liquid urea, a step consisting in keeping said first valve (4) in the closed position and opening said second and third valves (5, 7).
